# EUROPEAN PATENT SPECIFICATION

(11) **EP 0 685 667 B1**
(45) Date of publication and mention of the grant of the patent: **12.08.1998**
(21) Application number: 95303743.9
(22) Date of filing: 01.06.1995
(51) Int. Cl.: F16H 63/20, F16H 61/34

(54) **Gear selector mechanism for transmission**
Gangwähleinrichtung für ein Getriebe
Mécanisme de sélection de rapport pour une transmission

(30) Priority: 01.06.1994 GB 9410947
(43) Date of publication of application: 06.12.1995
(73) Proprietor: EATON CORPORATION, Cleveland Ohio 44114 (US)
(72) Inventor: Bills, Keith Anthony, Bolton, Lancashire (GB)
(74) Representative: Clarke, Geoffrey Howard

(56) References cited:
- EP-A- 0 025 198
- EP-A- 0 131 720
- FR-A- 2 594 926

## Description

This invention relates to a gear selector mechanism for transmissions.

In a multiple ratio transmission system it is desirable to be able to select any one of a plurality of ratios provided in the transmission. In order to achieve this a number of different methods are used, all following a basically similar principle in which a set of selector forks is provided with limited movement to engage and disengage the gear ratios. In some transmissions a single selector fork is secured to a selector shaft, there being provided a plurality of selector shafts each being selectively axially moveable to permit selection of one of a number of gear ratios. In other examples there is only one selector shaft which is axially and rotatably moveable and provided with a plurality of selector forks attached thereto and a series of cooperating keys and recesses on the shaft and selector forks to ensure that only one gear is selected at any one time. The selector lever operates through a defined series of gates to give a preferred gate pattern.

EP-A-0 131 720 describes a gear selector mechanism for a transmission having only a single selector shaft operating a number of selector forks arranged around the selector shaft. The selector forks engage and disengage with the selector shaft by means of a plurality of keys on the shaft and slots in the forks. The shaft is moved axially and radially by means of a selector finger which is in the form of a yoke and is connected to a second yoke assembly. The selector finger is connected to a cross-shaft. Axial and rotational movement of the cross shaft is used to select the gate and gear respectively.

In some applications the gear lever, sometimes known as a gear stick will operate directly on to the transmission, in others it operates via a remote system of levers and linkages. This invention is applicable to both the direct acting and remote control type operation for the transmission.

In a compound transmission there may be either one or both of a range change unit or a splitter unit, each in the form of auxiliary gearboxes, which provide a means of multiplying the ratios available in the main gearbox. In a compound transmission using a double H gate pattern and with an odd number of gear ratios in the main gearbox, the gate pattern to be followed after a range change or splitter change requires the operator to move the selector lever through a U-shaped pattern following the movement of the selector lever from the highest gear of a low range to the lowest gear of a high range (or vice-versa). A U-shaped gear change pattern is found to be both uncomfortable and unnatural, and increases the possibility of incorrect gear/ratio selection. This invention seeks to solve that problem by providing a continuous desired progressive gate pattern. Thus as the operator moves through either a range change or a splitter selection change the need to operate U-shaped gear change pattern is obviated.

According to the present invention there is provided a transmission selector mechanism for selecting any one of a plurality of gear ratios available in a transmission, the selector mechanism comprising a control cross shaft moveable in an axial direction for providing an across gate motion, and moveable in a radial direction about its longitudinal axis to provide a gear selection movement by means of an internal control selector shaft which is substantially perpendicular to the cross control shaft, the control cross shaft having on it three striking fingers,
a first striking finger being secured to the cross shaft and engaging a selector block,
the selector block being secured to the selector shaft and having a first U shaped recess therein of such a shape, dimension and orientation to enable the first striking finger to co-operatively engage a receiving pin fixed between sides of the U shaped recess in the selector block, such that axial motion of the cross shaft will cause rotation of the selector shaft about its longitudinal axis in order to position one selector shaft in the desired gate position, the distance between the sides of the U shaped recess being such that radial rotation of the cross shaft and the first striking finger attached thereto will not cause the selector block to move in an axial direction with the selector shaft, the selector block being further provided with 2nd and 3rd cup shaped recesses disposed at substantially diametrically opposed positions about the internal control selector shaft;
a second striking finger, a first end of which is mounted on the cross shaft and a second end of said second striking finger engaging one of said 2nd or 3rd recesses in the selector block;
a third striking finger, having a first end mounted on the cross shaft and located on the other side of the selector block to the first striking finger,
said third striking finger having its second end engaging a cooperating recess in a first end of a toggle, a second end of said toggle cooperatively engaging the selector block, said toggle being pivoted between its two ends
said second and third striking fingers mounted on the cross shaft with a set of cooperating pins and recesses on the cross shaft, the part of the striking fingers mounted on the cross shaft such that upon axial movement of the cross shaft in a first direction:
   i) disengages one of the 2nd and 3rd striking fingers and
   ii) engages the other of said 2nd and 3rd striking fingers in order to enable the said other striking finger to be moved in a radial direction in order to operate the selector block and engage one of the gear ratios in said transmission, upon the axial motion of the cross shaft in said first direction passed a predetermined point the engaged other striking finger becomes disengaged from the cooperating pins and recesses and so is not rotatable in a radial direction as a result of rotation of the cross shaft, the one of the 2nd or 3rd striking fingers, hitherto disengaged, engages with the set of the cooperating pins and recesses in order to be moveable radially to operate the selector block and thereby engage the gear ratios in said transmission.

A particular advantage of the present invention is that it permits a movement of a gear selector to give a progressive gate pattern.

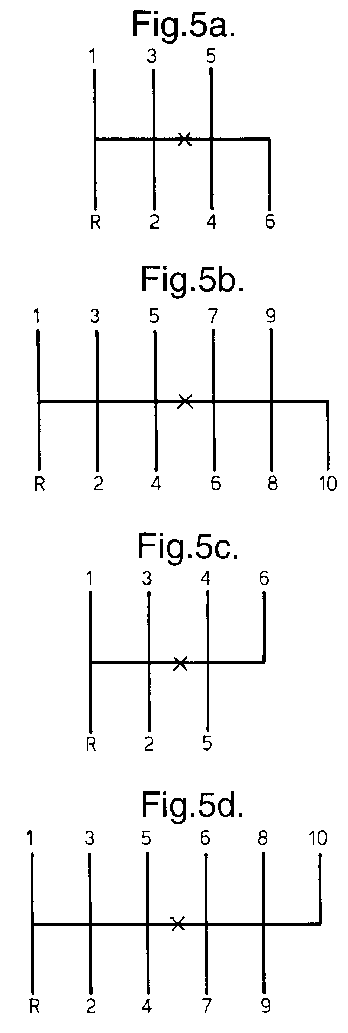

The present invention solves the problem of an awkward U-shaped shift pattern which results from a compound transmission, such as a 2 x 3 x 2 configuration or a 2 x 5 x 2 configuration, in which the main gear box has an odd number of ratios such as either 3 or 5 speeds. In moving the selector mechanism in a conventional known manner through the gates shown in Figure 5c or 5d it is apparent that in moving from say a position from third to fourth a driver or operator would have to move the selection lever through a U-shaped motion, which is both unnatural and uncomfortable.

The present invention uses a cross shaft, running substantially perpendicularly to the selector shaft in the main gearbox, with three striking fingers mounted on the cross shaft. One of the striking fingers is used for across the gate movement, one for low range gear selection and one for the high range gear selection. One of the striking fingers acts through a toggle, so as to reverse the movement of the selector block and give the desired progressive gate pattern. The across the gate finger is pinned to the cross shaft and plays no part in gear selection. The second and third striking fingers are not pinned to the cross shaft in the remote control housing. Mountings of the striking fingers on the cross shaft are so arranged that only one is engaged at a time. They are activated by pin like protrusions on the shaft which contact against inner mounting surfaces of the striking fingers.

The use of a toggle assembly interposed between one of the striking fingers and the selector block provides means of reversing the effective direction motion of the selector block in response to a particular motion of the cross shaft. By selectively engaging and disengaging the second and third striking fingers the selector block is operated by either one of the striking fingers to give either a normal or reversed action on the selector block. Moving the cross shaft steadily in one axial direction, the pins on the cross shaft which cooperate with recesses in the mounting portion of the selection striking fingers ensure that only one striking finger is activated at a time.

An embodiment of the invention will now be described with reference to the accompanying drawings, in which:
Figure 1 shows an arrangement of a gear box operable by use of a gear stick and remote control;
Figure 2 shows a detail of the operation of a cross shaft of a remote control gearbox;
Figure 3 shows a section through Y-Y, of Figure 2;
Figure 4 shows a section through Z-Z of Figure 2; and
Figures 5a,b,c and d show a variety of gate patterns.

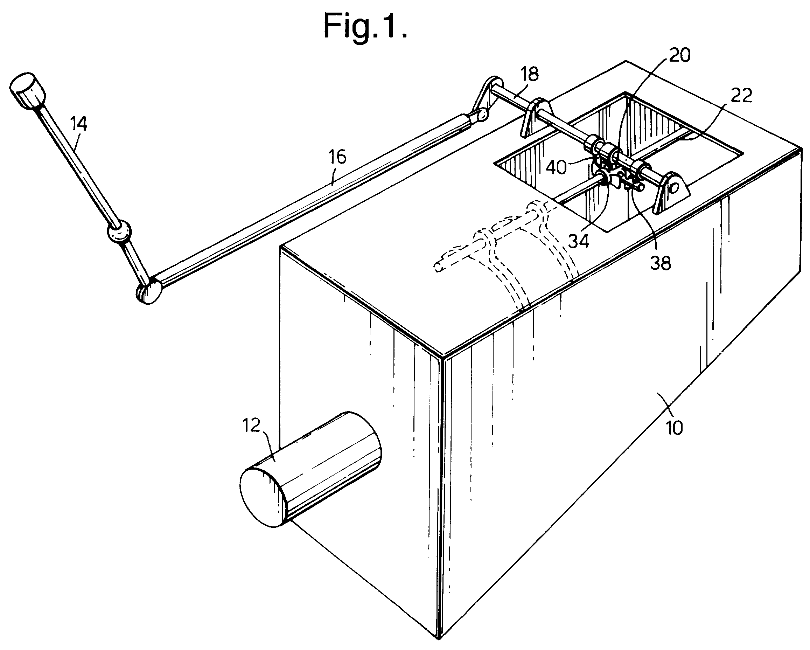

Figure 1 shows a general outline arrangement of a transmission 10, which in this example is provided with a remote control gear shift mechanism, exemplified by lever 14 connected by linkages 16 to a remote cross shaft 18. Secured to the cross shaft 18 is a first striking finger 20 which is used to rotate a selector shaft 22 located inside the main gear box. The selector shaft 22 has mounted on it one or more selector forks, these engage the gears in known manner.

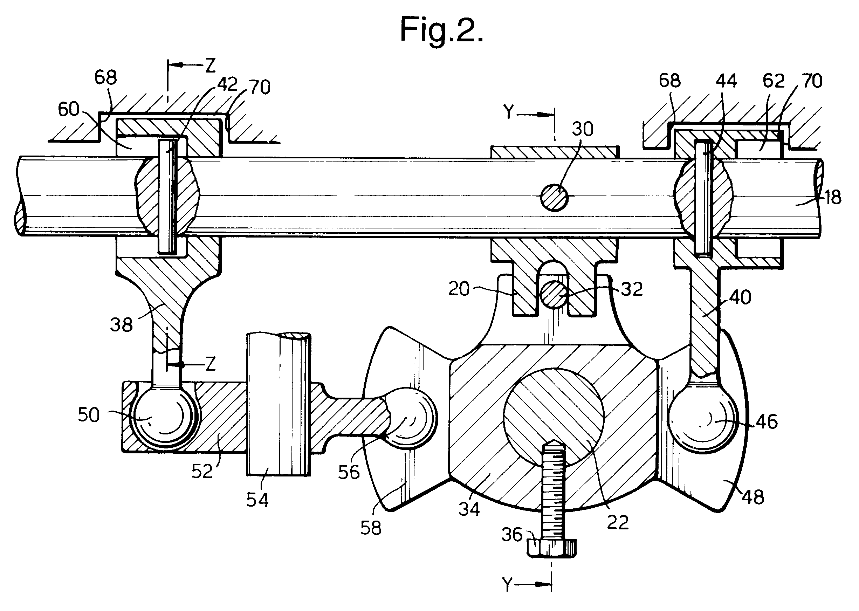

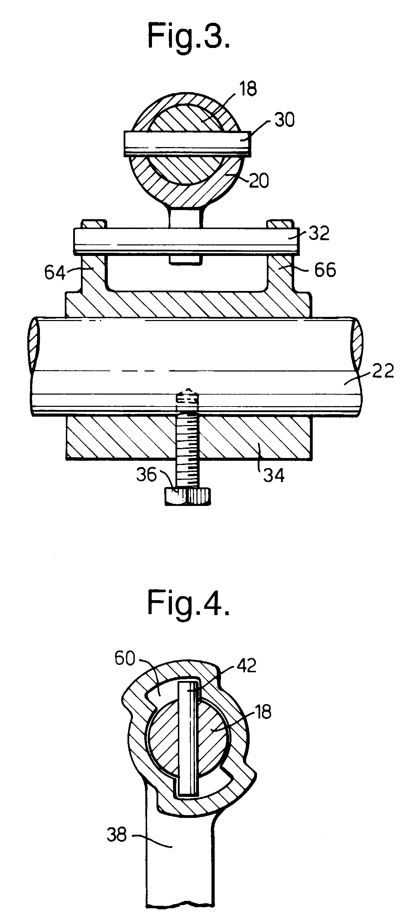

Figure 2 shows a sectional arrangement through the cross shaft 18 and selector shaft 22. The first striking finger 20 is pinned to the cross shaft by means of a securing pin 30 to ensure the first striking finger is securely connected to the cross shaft 18. The first striking finger 20 cooperatively engages a pin 32 secured to a selector block 34. The arrangement of the selector block 34 and pin 32 is shown in greater detail in Figure 3. Selector block 34 is mounted on selector shaft 22 and secured to the selector shaft by a securing means, such as a bolt 36.

Also mounted on the cross shaft 18 are second and third striking fingers 38,40. These striking fingers are slidably mounted on the shaft 18 and engage operating pins 42,44 to selectively engage striking fingers 38 and 40 in a manner which is explained in greater detail in Figure 4. Striking fingers 38 and 40 are prevented from moving axially by abutment faces 68,70 forming part of the remote control housing otherwise not shown. Third striking finger 40 has at one end a ball shaped knob end 46. The knob end 46 engages in a cooperating recess on the selector block 34.

The second striking finger 38 is also slidably mounted on cross shaft 18 and is also provided with a ball shaped knob end 50. The ball shaped end 50 engages a cooperating recess on a toggle 52, which is pivoted about a toggle axis pivot 54. A ball end 56 of the toggle engages a third cooperating recess 58 on the selector block 34.

Figure 3 shows a view through Y-Y of Figure 2 where appropriate the same reference numerals apply. The cross shaft 18 has mounted on it a first striking finger 20, secured thereto by pin 30. The striking finger 20 cooperatively engages with pin 32 which is secured to the selector block 34 between two sides 64,66 of a U-shaped recess in the selector block.

Figure 4 is a section through Z-Z of Figure 2 shows the arrangement of cooperating pins and recesses on a second striking finger 38. It can be seen the striking finger 38 is mounted on cross shaft 18. A cooperating recess 60 bounded by the walls of striking finger 38 provides a means for the cross shaft 18 to rotate without rotation of the striking finger 38.

Figures 5 a to d shows a plurality of different gate arrangements.

An example of the operation of one embodiment of the invention will now be described in greater detail.

It is desirable that the operating gate for the transmission follows one of the known patterns. The appropriate pattern will depend upon the number of gears in the transmission, and whether the compound transmission has a range change, a splitter auxiliary gearbox or includes both. The operation of the gate pattern is designed via the various elements of the remote selector linkage 14,16 and 18 to provide, in the driving environment, an appropriate pattern as shown in Figures 5a and b. The cross shaft 18 is mounted on top of the transmission 10 and is moveable both axially and radially. In a system in which there is no need for a remote control of the transmission a cross shaft would still be needed, but it need not be as long as that shown in Figure 1.

The movement of the cross shaft 18 along its axis is used to provide across the gate motion, the radial rotation of the shaft is used to provide gear selection. Turning now to Figure 2, as cross shaft 18 is moved in an axial direction, from left to right as shown in the drawing of Figure 2 a first striking finger 20 which is cooperatively engaged with pin 32 is moved to and fro. This causes the selector block 34 to rotate about the selector shaft 22 to give the across the gate motion. As the cross shaft 18 is rotated about its axis, generally in a relatively small arc to and fro about a central position which provides the in gate gear selection motion. As the diagram in Figure 2 shows, the third striking finger 40 is engaged with the cross shaft 18 and rotated axially by motion of the cross shaft 18. This motion in turn causes movement of the ball end 46 of the third striking finger 40, which is coupled to the selector block 34 by the cooperating recess 48 to cause the selector block 34 to move axially with the selector shaft 22, thereby engaging one of the ratios of the transmission. As the cross shaft 18 is rotated in the opposite direction the reaction on the ball end 46 is in the reverse direction to that described above and the selector block 34 is moved out of engagement through a neutral position into another of the gears in the transmission.

In a case where an across the gate motion is required the cross shaft 18 will slide axially at the point of which the cross gate motion is required and depending upon the particular configuration of the transmission the third striking finger could continue to be engaged. As the cross shaft 18 is moved further to the right in the drawing it
can be seen that the pin 44 will move into an area of recess on the third striking finger 40, and pin 42 will move into an area of engagement on second striking finger 38. At this point the third striking finger 40 will float freely on the cross shaft 18 and the second striking finger 38 will be brought into rotational engagement with the movement of the cross shaft 18. The abutment faces 68,70 are disposed on part of the transmission housing, not shown elsewhere in greater detail, but serve to restrain the striking fingers 38,40 from any significant axial movement along the cross shaft 18. As the cross shaft 18 is rotated axially to and fro the second striking finger of the cross shaft 18 will, when the second striking finger is lockingly engaged thereto, effect rotation of the ball end 50. Ball end 50 is engaged in a cooperating recess in toggle 52. Toggle 52 is pivoted about a pivot 54, a second end 56 of toggle 52 cooperatively engages a receiving recess 58 in the selector block 34. Thus when the second striking finger is engaged it causes motion of the toggle 52 about its axis which in turn causes axial motion of the selector block 34. Because the action of the second striking finger 38 is via a toggle 52 the direction of motion of the selector block 34 is reversed compared to the direction for the same rotational movement of third striking finger 40.

When an operator uses a transmission the gate pattern observed in the vehicle cab is normally a conventional H or double H type of pattern. Examples of these patterns are shown at Fig.5a for a transmission with a 3-speed main gearbox and Fig.5b for a transmission with a 5-speed main gearbox. The position of the cooperating pins 42,44 and cooperating recesses on striking fingers 38 and 40 will ensure that the selection of the desired ratio can be conveniently divided into two phases for the purposes of this description. Dealing first with the portion of the selector gate to the left of the "X" on the neutral line in Figures 5a and 5b, which is the lower range of the available gear ratios, only one of the second or third striking fingers is employed, whilst the other floats on the cross shaft. Operation of the second half of the range of ratios, that is to the right of the "X" on the neutral line of Figures 5a and 5b, requires the other of the second or third striking fingers to be engaged, whilst the first of said second or third striking fingers floats upon the cross shaft.

A typical gate arrangement for a transmission using this invention is applicable is shown in Figures 5a and 5b.

One way of effecting a range change is by use of a separate control switch which may be placed on the gear selection lever or at any other convenient location. Another known way of effecting a range change is to incorporate the range change command switch as part of the conventional gear change selector mechanism, so that across the gate motion passed a certain point triggers the action of a switch to change the range gear box ratio. The switch may be either electrical driving a relay, or a pneumatic valve system. As the selector lever is moved from third to the fourth on a 3-speed main gearbox transmission and from fifth to sixth on a 5-speed main gearbox transmission, it is necessary to make an across the gate motion and as the cross shaft is moved axially to effect the across the gate motion a trigger switch can be operated which causes the operation of the range change auxiliary transmission. The point at which the trigger switch is operated is conveniently shown by use of the "X" symbol on the neutral line in Fig.5. At the same time as the range change is occuring the cooperating pins 42,44 and striking finger cooperating recesses 60, 62 respectively become disengaged and engaged, and so the motion of the selector block 34 which was effected by the toggle operation is then effected by direct action of the striking finger 40. In this way the operator experiences a perfectly normal gear shift gate arrangement and progressive pattern rather than a U-shaped pattern which would be the result as shown in Figure 5c or 5d if the present invention were not utilized.

The above select mechanism is also appropriate for a transmission having a 2 x n x 2 type arrangement where n is an odd number of ratios to be incorporated in a main gearbox. It is indeed suitable for any type of arrangement where at some point there is going to be an awkward U-shaped change between consecutive gear ratio changes, as shown in Figures 5c or d.

As indicated above the cross shaft could be acted on directly by a gear stick and need not be a long shaft extending across the whole of the top of the main gearbox housing.

The choice of using a direct acting striking finger, or the finger acting through the toggle to give a selector block reversing motion to operate either the lower range or higher range gear ratios is a matter of choice and convenience which will be apparent to the designer of any of this type of transmission.

In some applications the striking fingers may be of the general shape and configuration shown or could be cranked or offset in some way if the detail of the design and clearances in the transmission housing make such an arrangement necessary or convenient.

## Claims

1. A transmission selector mechanism for selecting any one of a plurality of gear ratios available in a transmission (10), the selector mechanism comprising a control cross shaft (18) moveable in an axial direction for providing an across gate motion, and moveable in a radial direction about its longitudinal axis to provide a gear selection movement by means of an internal control selector shaft (22), which is substantially perpendicular to the cross control shaft (18), the control cross shaft (18) having on it three striking fingers (20,38,40),
a first striking finger (20) being secured to the cross shaft (18) and engaging a selector block (34),
the selector block (34) being secured to the selector shaft (22) and having a first U shaped recess therein of such a shape, dimension and orientation to enable the first striking finger to co-operatively engage a receiving pin (32) fixed between sides (64,66) of the U shaped recess in the selector block, such that axial motion of the cross shaft will cause rotation of the selector shaft (22) about its longitudinal axis in order to position one selector shaft in the desired gate position, the distance between the sides of the U shaped recess being such that radial rotation of the cross shaft and the first striking finger attached thereto will not cause the selector block to move in an axial direction with the selector shaft, the selector block being further provided with 2nd and 3rd cup shaped recesses (48,58) disposed at substantially diametrically opposed positions about the internal control selector shaft;
a second striking finger (40), a first end of which is mounted on the cross shaft and a second end of said second striking finger (46) engaging one of said 2nd or 3rd recesses in the selector block;
a third striking finger (38), having a first end mounted on the cross shaft and located on the other side of the selector block to the first striking finger (20),
said third striking finger having its second end (50) engaging a cooperating recess in a first end of a toggle (52), a second end of said toggle (56) cooperatively engaging the selector block (34), said toggle being pivoted between its two ends;
said second and third striking fingers (38,40) mounted on the cross shaft (18) with a set of cooperating pins (42,44) and recesses (60,62) on the cross shaft, the part of the striking fingers mounted on the cross shaft such that upon axial movement of the cross shaft in a first direction:
i) disengages one of the 2nd and 3rd striking fingers (38,40) and
ii) engages the other of said 2nd and 3rd striking fingers (38,40) in order to enable the said other striking finger to be moved in a radial direction in order to operate the selector block (34) and engage one of the gears ratios in said transmission, upon the axial motion of the cross shaft in said first direction passed a predetermined point the engaged other striking finger becomes disengaged from the cooperating pins and recesses, and so is not rotatable in a radial direction as a result of rotation of the cross shaft, the one of the 2nd or 3rd striking fingers, hitherto disengaged, engages with the set of the cooperating pins and recesses in order to be moveable radially to operate the selector block and thereby engage the gear ratios in said transmission.

2. A gear selector mechanism according to Claim 1 in which the pivot axis of the toggle is substantially mutually perpendicular to the cross shaft axis and the selector shaft axis.

3. A gear selector mechanism according to Claims 1 or 2 in which the cooperating pins are located on the shaft and the recesses are in the selector fingers.

4. A gear selector mechanism according to Claim 1 or 2 in which the co-operating pins and recesses are in the form of teeth like protrusions depending from the selector fingers and the recesses are in the shaft.

5. A gear selector mechanism according to any of the preceding claims in which the movement of the cross shaft passed the predetermined point also operates a switch means to operate a ratio change in an auxiliary gearbox connected to the transmission.

6. A gear selection mechanism according to claim 5 in which the auxiliary gearbox is of a range change type gearbox.

7. A gearbox selection mechanism according to claim 5 in which the auxiliary gearbox is of a splitter type gearbox.

## Patentansprüche

1. Gangwähleinrichtung zur Auswahl irgendeines einer Vielzahl von Übersetzungsverhältnissen oder Gängen eines Getriebes (10), wobei die Wähleinrichtung eine in Axialrichtung bewegbare Steuer-Querwelle (18) aufweist, um eine über einen Eingang hinweg erfolgende Bewegung vorzusehen und wobei die Steuer-Querwelle (18) ferner in Radialrichtung um ihre Längsachse bewegbar ist, um eine Gangwählbewegung mittels einer internen Steuer- Schalt/Wählwelle (22) auszuführen die im wesentlichen senkrecht zur Quer-Steuerwelle (18) verläuft, wobei die Steuer-Querwelle (18) drei Betätigungsfinger (20, 38, 40) aufweist:
einen ersten Betätigungsfinger der an der Querwelle (18) befestigt ist und mit einem Schalt- oder Wählblock (34) in Eingriff steht, wobei der Schaltblock (34) an der Schaltwelle (22) befestigt ist und darinnen eine erste U-förmige Ausnehmung mit einer solchen Form, Abmessung und Orientierung aufweist, um zu gestatten, daß der erste Betätigungsfinger kooperativ mit einem Aufnahmestift (32) in Eingriff kommt der zwischen Seiten (64, 66) der U-förmigen Ausnehmung im Schaltblock derart befestigt ist, das diese Axialbewegung der Querwelle die Drehung der Schaltwelle (22) um deren Längsachse bewirkt, um eine Wählwelle in der gewünschten Eingangsposition zu positionieren, wobei der Abstand zwischen den Seiten der U-förmigen Ausnehmung derart vorgesehen ist, daß die Radialdrehung der Querwelle und des ersten daran angebrachten Betätigungsfingers keine Bewegung des Schaltblocks in einer Axialrichtung mit der Schaltwelle verursacht, wobei der Schaltblock ferner mit zweiten und dritten an im wesentlichen diametral entgegengesetzten Positionen um die interne Steuer-Schaltwelle herum angeordneten napf-förmigen Ausnehmungen (48, 58) versehen ist;
einen zweiten Betätigungsfinger (40) der mit einem ersten Ende an der Querwelle angebracht ist und mit einem zweiten Ende mit einer der erwähnten ersten oder zweiten Ausnehmungen in dem Schaltblock in Eingriff steht; und
einen dritten Betätigungsfinger (38) der mit einem ersten Ende an der Querwelle angebracht ist und auf der anderen Seite des Schaltblocks zum ersten Betätigungsfinger (20) angeordnet ist;
wobei der dritte Betätigungsfinger mit seinem zweiten Ende (50) mit einer damit zusammenarbeitenden Ausnehmung in einem ersten Ende einer Wippe (52) in Eingriff steht, wobei ein zweites Ende der Wippe (56) kooperativ mit dem Schaltblock (34) in Eingriff steht und die Wippe zwischen ihren beiden Enden schwenkbar ist;
wobei die zweiten und dritten Betätigungsfinger (38, 40) an der Querwelle (18) angebracht sind und zwar mit einem satz von zusammenarbeitenden Stiften (42, 44) und Ausnehmungen (60, 62) an der Querwelle, wobei der Teil der Betätigungsfinger, der an der Querwelle angebracht ist, bei Axialbewegung der Querwelle in einer ersten Richtung:
i) einen der zweiten und dritten Betätigungsfinger (38, 40) außer Eingriff bringt, und
ii) den anderen der erwähnten zweiten und dritten Betätigungsfinger (38, 40) in Eingriff bringt, um zu ermöglichen, daß der erwähnte andere Betätigungsfinger in einer Radialrichtung bewegt wird, um den Schaltblock (34) zu betätigen und einen der Gänge in dem Getriebe in Eingriff zu bringen, wobei dann wenn die Axialbewegung der Querwelle in der erwähnten ersten Richtung einen vorbestimmten Punkt überschreitet, der in Eingriff stehende andere Betätigungsfinger von den damit zusammenarbeitenden Stiften und Ausnehmungen außer Eingriff kommt und somit nicht in einer Radialrichtung in Folge der Drehung der Querwelle verdrehbar ist, wobei einer der zweiten oder dritten Betätigungsfinger, der bislang außer Eingriff war, mit dem Satz von zusammenarbeitenden Stiften und Ausnehmungen in Eingriff kommt, um radial beweglich zu sein, um den Schaltblock zu betätigen und dadurch die Gänge in dem Getriebe in Eingriff zu bringen.

2. Gangwähleinrichtung nach Anspruch 1 wobei die Schwenkachse der Wippe im wesentlichen gegenseitig senkrecht zur Querwellenachse und der Schaltwellenachse verläuft.

3. Gangwähleinrichtung nach Anspruch 1 oder 2, wobei die zusammenarbeitenden Stifte auf der Welle angeordnet sind und die Ausnehmungen in den Wählfingern angeordnet sind.

4. Gangwähleinrichtung nach Anspruch 1 oder 2, wobei die zusammenarbeitenden Stifte und Ausnehmungen in der Form von zahnartigen Vorsprüngen vorgesehen sind, die von den Wählfingern wegstehen, und wobei die Ausnehmungen in der Welle angeordnet sind.

5. Gangwähleinrichtung nach einem der vorherigen Ansprüche, wobei die Bewegung der Querwelle über den vorbestimmten Punkt hinaus auch Schaltmittel betätigt, um eine Übersetzungsänderung in einem mit dem Getriebe verbundenen Hilfsgetriebekasten zu betätigen.

6. Gangwähleinrichtung nach Anspruch 5, wobei der Hilfsgetriebekasten ein Getriebekasten der Bereichsänderungsbauart ist.

7. Gangwähleinrichtung nach Anspruch 5, wobei der Hilfsgetriebekasten ein solcher der Splitter- oder Aufteilbauart ist.

## Revendications

1. Mécanisme sélecteur de vitesses pour sélectionner l'un quelconque parmi plusieurs rapports disponibles dans une boîte de transmission (10), ce mécanisme sélecteur comprenant un arbre transversal de commande (18) mobile suivant une direction axiale pour exécuter un mouvement transversal par rapport à la grille de changement de rapports, et mobile suivant une direction radiaie sur son axe longitudinal pour exécuter un mouvement de sélection de rapport au moyen d'un arbre sélecteur de commande interne (22), qui est sensiblement perpendiculaire à l'arbre transversal de commande (18), l'arbre transversal de commande (18) portant trois doigts sélecteurs (20,38,40),
un premier doigt sélecteur (20) étant fixé sur l'arbre transversal (18) et engageant un bloc sélecteur (34),
le bloc sélecteur (34) étant fixé sur l'arbre sélecteur (22) et ayant un premier logement en U dont la forme, la taille et l'orientation permettent au premier doigt sélecteur de s'engager sur un axe de réception (32) correspondant fixé entre les côtés (64,66) du logement en U du bloc sélecteur, de sorte qu'un mouvement axial de l'arbre transversal fera tourner l'arbre sélecteur (22) sur son axe longitudinal afin de placer un arbre sélecteur dans la position de grille désirée, la distance entre les côtés du logement en U étant telle qu'une rotation radiale de l'arbre transversal et du premier doigt sélecteur solidaire de celui-ci n'entraînera pas de mouvement du bloc sélecteur et de l'arbre sélecteur suivant une direction axiale, le bloc sélecteur comportant en outre des second et troisième logements en forme de coupelle (48,58) dont les positions sont sensiblement diamétralement opposés par rapport à l'arbre sélecteur de commande interne ;
un second doigt sélecteur (40), dont une première extrémité est montée sur l'arbre transversal et dont une seconde extrémité (46) est associée à l'un desdits second et troisième logements du bloc sélecteur ;
un troisième doigt sélecteur (38), dont une première extrémité est montée sur l'arbre transversal et située de l'autre côté du bloc sélecteur par rapport au premier doigt sélecteur (20),
la seconde extrémité (50) dudit troisième doigt sélecteur étant associée à un logement correspondant situé sur une première extrémité (52) d'une bascule, une seconde extrémité (56) de ladite bascule étant associée au bloc sélecteur (34), ladite bascule étant pivotée entre ses deux extrémités ;
lesdits second et troisième doigts sélecteurs (38,40) montés sur l'arbre transversal (18) avec un ensemble d'axes (42,44) et de logements (60,62) sur l'arbre transversal, la partie des doigts sélecteurs étant montée sur l'arbre transversal de telle sorte qu'un mouvement axial de l'arbre transversal dans un premier sens :
i) libère l'un des second et troisième doigts sélecteurs (38,40) et
ii) engage l'autre desdits second et troisième doigts sélecteurs (38,40) pour permettre le déplacement dudit autre doigt sélecteur suivant une direction radiale afin d'actionner le bloc sélecteur (34) et d'engager l'un des rapports de ladite boîte de transmission, lors du mouvement axial de l'arbre transversal dans ledit premier sens au-delà d'un point prédéterminé l'autre doigt sélecteur engagé se libère des axes et logements correspondants, et ne peut donc plus tourner suivant une direction radiale sous l'effet de la rotation de l'arbre transversal, ledit un des second et troisième doigts sélecteurs, jusqu'ici libre, s'accouple à l'ensemble d'axes et de logements correspondants pour être mobile radialement afin d'actionner le bloc sélecteur et engager de ce fait les rapports de ladite boîte de transmission.

2. Mécanisme sélecteur de rapport selon la revendication 1, caractérisé en ce que l'axe de pivotement de la bascule est sensiblement perpendiculaire à l'axe de l'arbre transversal et à l'axe de l'arbre sélecteur.

3. Mécanisme sélecteur de rapport selon la revendication 1 ou 2, caractérisé en ce que les axes correspondants sont situés sur l'arbre et les logements sont situés sur les doigts sélecteurs.

4. Mécanisme sélecteur de rapport selon la revendication 1 ou 2, caractérisé en ce que les axes et logements correspondants sont des saillies en forme de dent solidaires des doigts sélecteurs et les logements sont situés sur l'arbre.

5. Mécanisme sélecteur de rapport selon n'importe laquelle des revendications précédentes, caractérisé en ce que le mouvement de l'arbre transversal au-delà du point prédéterminé actionne également un moyen de contact afin de commander un changement de rapport sur une boîte de vitesses auxiliaire reliée à la boîte de transmission.

6. Mécanisme de sélection de rapport selon la revendication 5, caractérisé en ce que la boite de vitesses auxiliaire est du type à changement de vitesse.

7. Mécanisme de sélection de boîte de transmission selon la revendication 5, caractérisé en ce que la boîte de vitesses auxiliaire est du type diviseur.
